# EUROPEAN PATENT SPECIFICATION

(11) **EP 1 392 138 B1**
(45) Date of publication and mention of the grant of the patent: **28.03.2007**
(21) Application number: 01941012.5
(22) Date of filing: 07.06.2001
(51) Int. Cl.: A43B 7/12, A43B 9/18

(54) **FOOTWEAR STRUCTURE WITH IMPROVED WATERPROOF PROPERTIES AND METHOD OF ITS MANUFACTURE**
SCHUHAUFBAU MIT VERBESSERTEN WASSERDICHTIGKEITSEIGENSCHAFTEN UND VERFAHREN ZU DESSEN HERSTELLUNG
STRUCTURE DE CHAUSSURE A PROPRIETES D'ETANCHEITE A L'EAU AMELIOREES ET SON PROCEDE DE FABRICATION

(43) Date of publication of application: 03.03.2004
(73) Proprietor: Calzaturificio Skandia Srl, 31048 San Biagio di Callalta (IT)
(72) Inventor: MUGNAINI, Sergio, I-31046 Oderzo (IT)
(74) Representative: Agostini, Agostino
(86) International application number: PCT/IT2001/000294
(87) International publication number: WO 2002/098255

(56) References cited:
- WO-A-01/05261
- CH-A- 424 535
- DE-A- 4 400 739
- DE-U- 1 906 419
- US-A- 6 088 935

## Description

The present invention refers to a kind of footwear having waterproof properties as recited in the preamble of the appended claim 1.

In the last few years, a number of solutions have been proposed in view of remedying the age-old water seepage problem that most especially troubles footwear made under heavy utilization of synthetic materials, both in the form of cut-to-measure pieces of cloth or parts that are injection-moulded *in-situ.* It is in fact largely known that, owing mainly to the kind of comfort that they offer to the users and their relatively reduced cost, these footwear enj oy an ever increasing acceptance on the marketplace.

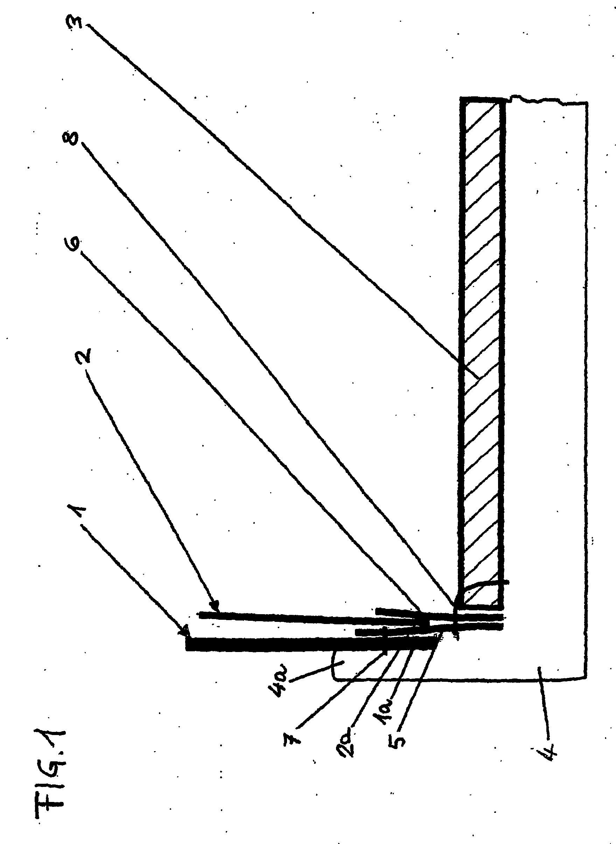

Figure 1, which accompanies this description, reproduces, albeit with different reference numerals, Figure 4 accompanying the patent publication US-A-6 088 935, which is a schematical cross-sectional view of a footwear structure that can be considered as constituting a particularly interesting example of the current state of the art.

Said footwear structure comprises, further to an outer outer shaft 1, an inner shaft or lining 2, an inner sole or arch-support 3 and an injection-moulded outer sole 4, also two sealing strips 5, 6.

The inner lining 2 is constituted by at least a functional layer that is impermeable to water, but permeable to water vapour, as well as at least a layer of lining material on the inner side of the footwear, whereas the inner sole 3 is made more or less integrally of a waterproof material. The same applies to the strips 5, 6, which are also made of a waterprof material. The lower end 2a of the inner lining is enclosed between the two strips 5, 6, which on one side are glued in a waterproof manner to said end 2a and, on the other side, are glued together. The lower end la of the outer shaft 1 is in turn joined to the strip 5 by means of a first Strobel sewing seam 7 (which is called in this way owing to its being carried out with a sewing machine manufactured by the homonymous firm that makes a sewing seam following a zigzag pattern), while both strips 5 and 6, in correspondence of the zone where they are glued to each other, are joined to the inner sole 3 by means of a second Strobel sewing seam 8. Quite obviously, the outer side end 4a of the injection-moulded sole 4 extends upwards beyond the strips 5, 6.

Such a footwear structure performs quite satisfactorily, but requires a rather complex manufacturing cycle, especially as far as to the positioning of the strips and to the need for both gluing and sewing techniques to be used, and this does of course considerably affect the manufacturing costs on the whole. Furthermore, owing to the fact that, with a Strobel machine, the perforations of the needle reach only up to 5 to 6 millimetres from the end of the outer shaft, an integral embedding of the sewing seams 7 and 8 in the injected plastic material of the sole 4 can not be ensured.

Other examples of known footwear structures having waterproof properties are disclosed by DE-A-44 00 739 and EP-A-629 359.

DE-A-44 00 739 discloses a boot for workers where the inner sole and an additional fireproof sole have their outer edges bent downwards and in contact with one another so as to be sewed together to the lower edge of the shaft, prior to injection moulding of the outer sole. Quite clearly, to permit such a stitching seam, the additional fireproof sole can uniquely be made with a flexible material.

EP-A-629 359 discloses a shoe making process where : in a first step the lower edges of the lining, covered with a water repellent canvas, are perimetrally stitched to an innermost insole; in a second step the lower edges of the vamp or shaft are perimetrally stitched to a mesh-like outermost insole; in a third step the liquid plastic material of the outer sole is injected so as to pass through the outermost insole and surround both stitching seams. This process is labour intensive, therefore it is also expensive, since it needs two separate sewing seams.

It therefore is a main purpose of the present invention to provide a footwear structure featuring an excellent resistance to water seepage and capable of being manufactured in a simple and economic manner. As a result, also consumers with a medium-to-low purchasing power can afford to buy footwear made in this way.

The features of the present invention form the subject of the appended claims and will be more readily understood, along with the advantages of the present invention, from the description that is given below of a preferred, although not sole embodiment thereof. In this connection, reference should be made also to the accompanying drawings, in which:
- Figure 1 is a schematical view of a footwear structure representing the state of the art which is considered by the Applicant as being the most relevant, and which has been already discussed earlier in the present description;
- Figure 2 is a view of a footwear structure according to the present invention, as represented again in a schematical form from a section on a transversal plane, ie. a plane that is perpendicular to the median longitudinal plane of the foot.

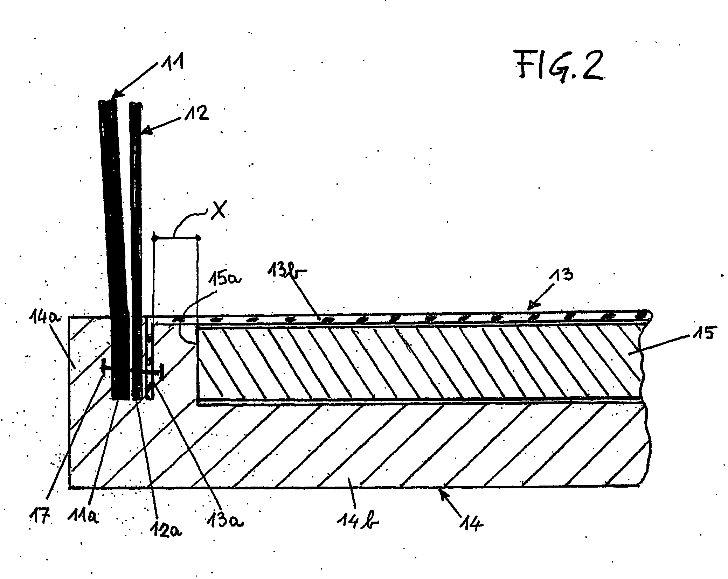

As shown in Figure 2, a footwear structure according to the present invention comprises, further to an outer shaft 11 and an inner shaft or lining 12, also a continuous rigid member 15 arranged in an intermediate position between an inner sole or arch-support 13 and the ground-treading base 14b of an outer sole 14.

As this is the case in the prior art, the inner lining 12 is made of a material (such as the ones that are currently marketed under the trade-names of SYMPATEX^{™} and GORE-TEX^{™}) that is constituted by at least a functional layer, which is impermeable to water, but permeable to water vapour, and by at least a layer of lining material on the inner side of the footwear, whereas the outer sole 14 is manufactured out of a plastic material, such as a polyurethane, which is injection-moulded *in situ* from its liquid state. The inner sole 13 is in turn manufactured out of a wide-mesh net-like fabric capable of being penetrated, during the injection-moulding operation, by the liquid-state material of the outer sole 14, and is interrupted at a short distance, which may be situated anywhere between approx. 25 and 35 mm, from the end portion of the heel to the purpose of allowing for the insertion of a continuous rigid member 15.

Such a continuous rigid member, that forms one of the main features of the present invention, has a uniform thickness in the order of 4 to 5 millimetres and is made of either a natural material (eg. leather) or a synthetic material (eg. polypropylene homopolymer) which remains grafted, ie. clinging to the injected material of the outer sole 14, but, unlike the inner sole 13, is not penetrated by the same material.

According to another basic feature of the present invention, the peripheral end 13a of the inner-sole 13 is bent downwards in such a manner as to be capable of being joined to the lower ends 11 a and 12a of the outer shaft 11 and the inner lining 12, respectively, by means of a kind of straight-line sewing seam 17. running close to the terminal end, which, in a *per se* known manner, is preferably carried out with the use of a monofilament. It should be recalled here that a straight-line sewing seam of such a kind is a continuous seam (rather than a zigzag one like a typical Strobel sewing seam) and this offers the practical advantage that the perforations of the needle reach up to as far as 2 millimetres from the end of the outer shaft 11 (whereas, as this has been pointed out earlier in this description the perforations of the needle reach up to only 5 to 6 millimetres from the end of the outer shaft in a Strobel sewing seam).

As this may be noticed in Figure 2, the thickness of the continuous rigid member 15 is more or less equal to the height of the afore cited ends 11a, 12a, 13a which are joined to each other by the straight-line sewing seam 17.

The manufacturing cycle for a footwear structure according to the present invention substantially, consists of the following steps, which come downstream of the production of the individual component parts that are not made or obtained *in situ:*
a) joining of the peripheral end 13a of the inner sole 13 to the lower ends 11a and 12a of the outer shaft 11 and the inner lining 12, respectively, by means of the afore cited straight-line sewing seam 17;
b) rotation by 180° (practically, an overturning) of the first sub-assembly, ie. the one obtained in the preceding phase a);
c) arrangement of the continuous rigid member 15 on the portion 13b of the inner sole 13 that is inside the peripheral end 13a, in such a manner as to obtain a second sub-assembly constituted by the combination of said first sub-assembly with said member 15. In this connection, the fact should be duly emphasized that the "clearance", as indicated with X in Figure 2, between the end 15a of the member 15 and the end 13a of the inner sole 13 is actually quite narrow, typically 4 to 5 mm.
d) arrangement of the second sub-assembly, ie. the one obtained in the preceding phase c), in a traditional mould formed by a plunger or male portion and, of course, a corresponding female portion whose pattern reproduces the ground-treading surface 14b of the footwear. Such a mould does not require a more detailed illustration or explanation, since it is largely known to all those skilled in the art;
e) closing of the mould and injection of the liquid plastic material for moulding the outer sole 14 *in situ,* in such a manner as to enable the peripheral end 14a thereof to come to lie clearly above the straight-line sewing seam 17, as this is already *per se* known. As already mentioned earlier in this description, during its injection the liquid plastic material penetrates through the meshes of the net-like fabric used to make the inner lining 13, but is unable to penetrate the continuous rigid member 15.

The advantages deriving from a footwear structure made in the above illustrated manner can be summarized as follows :
- thanks to the penetration through the wide meshes of the net-like fabric used in the manufacture of the inner sole 13, and thanks to said inner sole being interrupted at a short distance from the end of the heel, both the continuous rigid member 15 and the straight-line sewing seams 17 between the afore cited ends 13a, 11a, 12a of the inner sole or arch-support 13, the outer shaft 11 and the inner lining 12, respectively, are entirely embedded in the plastic material used in the manufacture of the outer sole 14. As a result, the footwear actually assumes a structure that might be defined as "monolithic" and, as such, is therefore very effective in ensuring both mechanical strength and robustness and resistance against water infiltrations along the surfaces of the outer shaft 11 and the inner lining 12;
- the continuous rigid member 15 being so centered with respect to the outer shaft 11 and the inner lining 12 ensures a constant quality even in the case of mass-production in very large quantities;
- the use of a monofilament for the straight-line sewing seams 17 is effective in further reducing the risk of seepage (water penetration).

## Claims

1. Footwear structure comprising:
- an inner sole (13), made of a wide-mesh net-like or similar fabric capable of being penetrated by a liquid-state plastic material and having a peripheral end (13a) which is bent downwards,
- an outer shaft (11), made using one or more materials, having a lower end (11a) directed toward said inner sole (13),
- an inner shaft or lining (12), made of a material that is constituted by at least a functional layer, which is impermeable to water, but permeable to water vapour, and, on the inner side of the footwear, by at least a layer of lining material, the said inner shaft also having a lower end (12a) directed toward said inner sole (13)
- at least one continuous sewing seam (17) that joins to each other the said lower ends (11 a, 12a) of the outer shaft (11) and the inner shaft or lining (12) and the downward-bent peripheral end (13a) of the inner sole (13), respectively,
- an outer sole (14), made of a plastic material injection-moulded in-situ from its liquid state, having a peripheral end (14a) extended upwards above said at least one sewing seam (17) and a ground-treading surface (14b),
**characterized in that** it further comprises at least a continuous rigid member (15) arranged below at least a portion of said inner sole (13) which is entirely embedded in the plastic material of the outer sole (14) above the ground-treading surface (14b) and centered with respect to said outer shaft (11) and said inner shaft or lining (12) due to a spacing or clearance (X) left between the peripheral end (15a) of said rigid member (15) and the peripheral end (13a) of said inner sole (13), the said spacing being filled with the plastic material of the outer sole (14) when it is injection-moulded to penetrate through the meshes of the inner sole (13).

2. Footwear structure according to claim 1, **characterized in that** said continuous rigid member (15) is made of a materials, either natural, like leather or synthetic, like polypropilene homopolymer which remains grafted to the injected material of the outer sole (14) but cannot be penetrated by the same material.

3. Method for manufacturing a footwear structure comprising, according to any of the preceding claims :
- an outer shaft (11), made using one or more materials,
- an inner shaft or lining (12), made of a material that is constituted by at least a functional layer, which is impermeable to water, but permeable to water vapour, and, on the inner side of the footwear, by at least a layer of lining material,
- an outer sole (14), made of a plastic material that is injection-moulded in-situ from its liquid state, whose peripheral end (14a) extends upwards above at least a sewing seam (17) that joins the lower ends (11a, 12a) of the outer outer outer shaft (11) and the inner lining (12), respectively, to each other,
- an inner sole (13), made of a wide-mesh net-like or similar fabric capable of being penetrated by the liquid-state material of the outer sole (14) during the injection-moulding thereof
- at least a continuous rigid member (15),
which comprises the steps of:
a) joining of the peripheral end (13a) of the inner sole (13) to the lower ends (1 1 a, 12a) of the outer shaft (11) and the inner lining (12), respectively, by means of a same continuous sewing seam (17), so as to thereby obtain a first subassembly;
b) overturning by 180° said first subassembly;
c) injection moulding the outer sole (14) so as to have said continuous sewing seam (17) embedded into the liquid-state material of the outer sole (14),
**characterized by** the following step between the preceding steps b) and c) :
d) arranging said continuous rigid member (15) on the portion (13b) of the inner sole (13) that is inside the peripheral end (13a) thereof, in such a manner as to obtain a second subassembly,
and furthermore **characterized in that** the injection moulding step c) is made onto said second subassembly so as to substantially embed also said continuous rigid member (15) in the liquid-state plastic material of the outer sole (14).

## Patentansprüche

1. Schuhwerkaufbau umfassend:
- eine innere Sohle (13), gemacht aus weitmaschigem, netzartigem oder ähnlichem Gewebe, das fähig ist von einem Kunststoffmaterial im flüssigen Zustand durchdrungen zu werden und die ein peripheres Ende (13a) hat, welches nach unten gebogen ist,
- einen äußeren Schaft (11), der unter Verwendung von einem oder mehreren Materialien gemacht ist, der ein unteres Ende (11a), das in Richtung der Sohle (13) zeigt, hat,
- einen inneren Schaft oder ein Futter (12), gemacht aus einem Material, das aufgebaut ist aus mindestens einer funktionalen Schicht, welche undurchdringlich für Wasser ist, aber durchdringlich für Wasserdampf, und, aus mindestens einer Schicht Futtermaterial an der inneren Seite des Schuhwerks, wobei der innere Schaft auch ein unteres Ende (12a) hat, das in Richtung der inneren Sohle (13) zeigt,
- mindestens eine durchgängig genähte Naht (17), die die unteren Enden (11a, 12a) des äußeren Schafts (11) und den inneren Schaft oder das Futter (12) und das nach unten gebogene periphere Ende (13a) der inneren Sohle (13) jeweils miteinander verbindet,
- eine äußere Sohle (14), die aus einem Kunststoffmaterial gemacht ist, das in-situ aus seinem flüssigen Zustand spritzgegossen ist, die ein peripheres Ende (14a), das sich aufwärts über mindestens einer genähten Naht (17) erstreckt und eine Bodentrittfläche (14b) hat,
**gekennzeichnet dadurch, dass** er ferner mindestens ein durchgängig starres Teil (15) umfasst, angeordnet unter mindestens einem Abschnitt der inneren Sohle (13), welche ganz eingebettet ist in das Kunststoffmaterial der äußeren Sohle (14), über der Bodentrittfläche (14b) und bezüglich des äußeren Schafts (11) und des inneren Schafts oder Futters (12) zentriert ist, aufgrund einer Lücke oder eines Freiraums (X), der zwischen dem peripheren Ende (15a) des starren Teils (15) und dem peripheren Ende (13a) der inneren Sohle (13) gelassen wurde, wobei diese Lücke mit dem Kunststoffmaterial der äußeren Sohle (14) gefüllt wird, wenn sie spritzgegossen wird, um die Maschen der inneren Sohle (13) zu durchdringen.

2. Schuhwerkaufbau gemäß Anspruch 1, **gekennzeichnet dadurch, dass** das durchgängig starre Teil (15) entweder aus einem natürlichen Material, wie Leder, oder einem synthetischen, wie Polypropylen Homopolymer gemacht ist, welches auf dem eingespritzten Material der äußeren Sohle (14) gepfropft bleibt, aber was nicht durch das selbe Material durchdrungen werden kann.

3. Verfahren zur Herstellung eines Schuhwerkaufbaus, gemäß einem der vorangehende Ansprüche mit:
- einem äußeren Schaft (11), gemacht unter Verwendung eines oder mehrerer verwendeter Materialien,
- einem inneren Schaft oder Futter (12), gemacht aus einem Material, das aufgebaut ist aus mindestens einer funktionalen Schicht, welche undurchlässig für Wasser ist, aber durchlässig für Wasserdampf, und auf der inneren Seite des Schuhwerks, aus mindestens einer Schicht Futtermaterial,
- einer äußeren Sohle (14), gemacht aus einem Kunststoffmaterial, das in-situ aus seinem flüssigen Zustand spritzgegossen ist, dessen peripheres Ende (14a) sich aufwärts über mindestens einer genähten Naht (17) erstreckt, die jeweils die unteren Enden (11a,12a) des äußeren äußeren äußeren Schafts (11) und des inneren Futters (12) miteinander verbindet,
- einer inneren Sohle (13), gemacht aus weitmaschigem, netzartigem oder ähnlichem Gewebe, das fähig ist, von dem Material der äußeren Sohle (14) in flüssigem Zustand während dessen Spritzgusses durchdrungen zu werden,
- mindestens einem durchgängig starren Teil (15), welches die Schritte aufweist:
a) jeweiliges Verbinden des peripheren Endes (13a) der inneren Sohle (13) mit den unteren Enden (11a, 12a) des äußeren Schafts (11) und des innere Futters (12), durch die selbe durchgängig genähte Naht (17), um **dadurch** eine erste Unterbaugruppe zu erreichen;
b) Umdrehen der ersten Unterbaugruppe um 180°;
c) Spritzgießen der äußeren Sohle (14), um die durchgängig genähte Naht (17) in dem Material der äußeren Sohle (14) im flüssigen Zustand einzubetten,
**gekennzeichnet durch** den folgenden Schritt zwischen den vorigen Schritten b) und c):
d) Anordnen des durchgängig starren Teils (15) derart auf den Bereich (13b) der inneren Sohle (13), der innerhalb ihres peripheren Endes (13a) liegt, dass eine zweite Unterbaugruppe erreicht wird,
und darüber hinaus **gekennzeichnet dadurch, dass** der Spritzgießschritt c) auf der zweiten Unterbaugruppe gemacht wird, um auch das durchgängig starre Teil (15) im wesentlichen in das Kunststoffmaterial der äußeren Sohle (14) in flüssigem Zustand einzubetten.

## Revendications

1. Structure de chaussure, comprenant :
- une semelle interne (13), réalisée avec un tissu en forme de filet à larges mailles ou similaire capable d'être pénétré par une matière plastique à l'état liquide et ayant une extrémité périphérique (13a) qui est pliée vers le bas,
- une tige externe (11), réalisée en utilisant un ou plusieurs matériaux, ayant une extrémité inférieure (11a) dirigée vers ladite semelle interne (13),
- une tige interne ou doublure (12) réalisée avec un matériau qui est constitué par au moins une couche fonctionnelle, qui est imperméable à l'eau, mais perméable à la vapeur d'eau, et sur le côté interne de la chaussure, par au moins une couche de matériau de doublure, ladite tige interne ayant également une extrémité inférieure (12a) dirigée vers ladite semelle interne (13),
- au moins une couture continue (17) qui s'assemble auxdites extrémités inférieures (11a, 12a) de la tige externe (11) et à la tige interne ou doublure (12) et l'extrémité périphérique pliée vers le bas (13a) de la semelle interne (13), respectivement,
- une semelle externe (14), réalisée à partir d'une matière plastique moulée par injection sur site à partir de son état liquide, ayant une extrémité périphérique (14a) étendue vers le haut au-dessus de ladite au moins une couture (17) et une surface de semelle en contact avec le sol (14b),
**caractérisée en ce qu'**elle comprend en outre au moins un élément rigide continu (15) agencé au-dessous d'au moins une partie de ladite semelle interne (13) qui est complètement encastré dans la matière plastique de la semelle externe (14) au-dessus de la surface de semelle en contact avec le sol (14b) et centré par rapport à ladite tige externe (11) et ladite tige interne ou doublure (12) en raison d'un espacement ou jeu (X) laissé entre l'extrémité périphérique (15a) dudit élément rigide (15) et l'extrémité périphérique (13a) de ladite semelle interne (13), ledit espacement étant rempli avec la matière plastique de la semelle externe (14) lorsqu'elle est moulée par injection pour pénétrer à travers les mailles de la semelle interne (13).

2. Structure de chaussure selon la revendication 1, **caractérisée en ce que** ledit élément rigide continu (15) est réalisé avec un matériau, soit naturel comme le cuir ou synthétique comme un homopolymère de polypropylène qui reste greffé sur le matériau injecté de la semelle externe (14) mais qui ne peut pas être pénétré par le même matériau.

3. Procédé pour fabriquer une structure de chaussure comprenant, selon l'une quelconque des revendications précédentes : une tige externe (11) réalisée en utilisant un ou plusieurs matériaux,
- une tige interne ou doublure (12) réalisée avec un matériau qui est constitué par au moins une couche fonctionnelle, qui est imperméable à l'eau, mais perméable à la vapeur d'eau, et sur le côté interne de la chaussure, par au moins une couche de matériau de doublure,
- une semelle externe (14), réalisée avec une matière plastique qui est moulée par injection sur site à partir de son état liquide, dont l'extrémité périphérique (14a) s'étend vers le haut au-dessus d'au moins une couture (17) qui assemble les extrémités inférieures (11a, 12a) de la tige externe (11) et de la doublure interne (12), respectivement, entre elles,
- une semelle interne (13), réalisée avec un tissu en forme de filet à larges mailles ou similaire capable d'être pénétré par le matériau à l'état liquide de la semelle externe (14) pendant son moulage par injection,
- au moins un élément rigide continu (15),
qui comprend les étapes consistant à :
a) assembler l'extrémité périphérique (13a) de la semelle interne (13) aux extrémités inférieures (11a, 12a) de la tige externe (11) et de la doublure interne (12), respectivement, au moyen d'une même couture continue (17), afin d'obtenir ainsi un premier sous-ensemble ;
b) retourner à 180° ledit premier sous-ensemble;
c) mouler par injection la semelle externe (14) afin d'avoir ladite couture continue (17) encastrée dans le matériau à l'état liquide de la semelle externe (14),
**caractérisé par** les étapes suivantes entre les étapes b) et c) précédentes, consistant à :
d) agencer ledit élément rigide continu (15) sur la partie (13b) de la semelle interne (13) qui est à l'intérieur de son extrémité périphérique (13a), afin d'obtenir un second sous-ensemble, et
en outre **caractérisé en ce que** l'étape de moulage par injection c) est réalisée sur ledit second sous-ensemble afin d'enfoncer sensiblement également ledit élément rigide continu (15) dans la matière plastique à l'état liquide de la semelle externe (14).
